# EUROPEAN PATENT SPECIFICATION

(11) **EP 0 664 862 B1**
(45) Date of publication and mention of the grant of the patent: **16.05.2001**
(21) Application number: 93919729.9
(22) Date of filing: 22.09.1993
(51) Int. Cl.: F16L 9/06, B21D 15/04, F28D 7/02

(54) **MANUFACTURE OF HELICALLY CORRUGATED CONDUIT**
HERSTELLUNG VON WENDELGEWELLTEN ROHREN
PRODUCTION D'UN CONDUIT ONDULE EN HELICE

(30) Priority: 22.09.1992 NZ 24443192
(43) Date of publication of application: 02.08.1995
(73) Proprietor: Energy Savings Concepts Limited, Napier (NZ)
(72) Inventor: Innes, Rodney Mitchell, Te Kouma, Coromandel (NZ)
(74) Representative: Abrams, Michael John
(86) International application number: NZ9300087
(87) International publication number: WO9407071

(56) References cited:
- GB-A- 1 326 320
- GB-A- 1 365 039
- US-A- 3 606 780
- US-A- 3 732 717
- Derwent Soviet Inventions Illustrated, General Engineering, P39; & SU,A,239185 (VAINER & OVSIANNIKOV) 21 July 1969 (21.7.69), Abstract & Figure.

## Description

This invention relates to the manufacture of helically corrugated conduits and conduits made by that method such as heat exchange conduits used to exchange heat from one fluid to another, in liquid to gas, gas to gas or liquid to liquid heat exchange and also the drying of powders or any other uses where a helical spiralled tube is of assistance such as electrical element housing tube.

A number of conduits incorporating a helical spiral or even a multi-start helix in the wall of the conduit are known. Such tubes or conduits are variously described in apparatus in specification numbers GB1511718, GB2374609, US3730229 and US4559999.

Of these specifications, only US3730229 goes into some detail on the method of manufacture of such a conduit. The method disclosed in that specification involves creating indentations in the tube to act as starting points for the helical spiral and then the simultaneous twisting and longitudinal compression of the tube over an internal mandrel and within an exterior tube. Such a method is both complex, time consuming and can lead to the twisted helical conduit being jammed within the outer tube.

Both this prior art method of manufacture and others suggested by twisting the conduit can lead to conduits of uneven wall thickness and uneven stresses within the finished conduit. This can lead to breakage during manufacture and failure of the conduit in use.

In United States Patent 3,606,780 three forming rollers have an outer periphery with arced grooves and ridges which are pressed into the pipe as it passes between the rollers to form the helical grooves and ridges in the pipe.

### OBJECTS OF THE INVENTION

It is thus an object of the present invention to provide a method of manufacture of a helically corrugated conduit with a relatively constant wall thickness and/or which is more economic than the prior art methods.

### SUMMARY OF THE INVENTION

According to the invention, there is provided a method of manufacturing a helically corrugated conduit incorporating at least one helical undulation thereon and including the steps of:
i) positioning a portion of substantially smooth walled tube formed in a malleable material on a support means;
ii) positioning at least one forming wheel with at least its outer periphery in contact with the surface of said tube with the axis of said wheel mounted at an angle relative to a longitudinal axis of said tube;
iii) rotating said tube and/or forming wheel one relative to the other to form a wave of material from a wall portion of said tube adjacent said forming wheel to longitudinally undulate a portion of said tube wall substantially helically; and characterised in that the outer periphery of the wheel forms the wave of material substantially without diminishing the wall thickness so that the finished conduit is shorter than the initial tube.

### BRIEF DESCRIPTION OF THE DRAWINGS

One form of the invention will now be described in relation to the accompanying drawings in which:

Figure 1 is a partial cutaway substantially diagrammatic side view of one embodiment of the conduit of this invention.

Figure 2 is a diagrammatic end view of the conduit of Figure 1.

Figure 3 is a substantially diagrammatic cross-sectional side view of a further embodiment of a portion of conduit.

Figure 4 is a similar view to that of Figure 3 showing a still further embodiment of conduit.

Figure 5 is a similar view to that of Figures 3 and 4 showing a still further embodiment of conduit.

Figure 6 is a substantially diagrammatic side view of an apparatus for manufacturing the conduit in one embodiment.

Figure 7 is a substantially diagrammatic cross-sectional side view of a portion of the forming head of the apparatus of Figure 6.

Figure 8 is a substantially diagrammatic end view of the forming head of Figure 7 viewed substantially longitudinally of the apparatus of Figure 5.

### DESCRIPTION OF PREFERRED EMBODIMENTS

With reference to the drawings, in the preferred form of the invention, the conduit as generally indicated by arrow 1 is preferably formed in a thermally conductive material such as metal; for example copper, stainless steel, aluminium and the like, being preferably a substantially malleable or formable material if it is to be used as a heat exchange conduit. Other materials for heat exchange or other uses may be substituted. It is possible to use the method on plastic tubing and also plastic lined tubing. The forming method can form the plastic lining with the tubing in one operation.

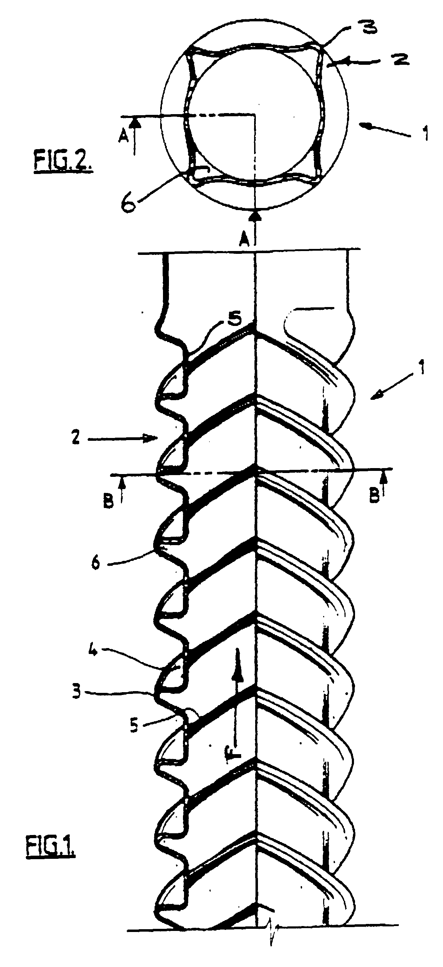

With particular reference to Figures 1 to 5, a heat exchange conduit 1 produced by the method of manufacture is preferably formed from substantially smooth walled copper tube and is arranged along at least a portion of the length of the tube to have a substantially helically ribbed portion as generally indicated by arrow 2.

It will be appreciated that the undulations substantially increase the surface area to length ratio of the tube over the substantially smooth walled tube and enhance the thermal-conductivity of the tube relative to its length in view of the increase in surface area.

The heat exchange conduit 1 is preferably provided with undulations which have outer ribs 3 thereof which project outwardly of a general peripheral line of the tube from which the heat exchange conduit 1 is made. The undulations are each preferably defined as a plurality of helical ribs 3 extending about and longitudinally of the conduit 1 coupled with an associated groove 4 which, in this preferred form extends inwardly into the interior of the tube to define a plurality of internal ribs 5 therein.

In the preferred form of the invention, the extent of outward projection of the ribs 3 is substantially commensurate with an outer preferred diameter of the finished heat exchange conduit 1.

Preferably the inner ribs 5 are such that they are substantially commensurate with a normal inner diameter of the tube from which the heat exchange conduit 1 is formed. In this way, it will be appreciated that the formation of the conduit 1 does not reduce its cross-sectional area and perhaps create an undue restriction therein. Internal grooves 6 defined between the internal ribs 5 enable a flow of fluid through the interior of the conduit passageway to extend into the ribs 3, to provide a high ratio of surface area to length of the tube conduit 1 and good heat transfer properties therein, as fluid flows through the passageway of the conduit.

In the preferred form of the invention, preferably the helical ribbing 3 of the tube to provide the conduit 1 is provided as a plurality (preferably four) of helical ribs 3 each commencing in a similar longitudinal position relative to said tube, substantially diametrically opposed one relative to the other so as to provide a form substantially known in the trade as "multistart" helixes.

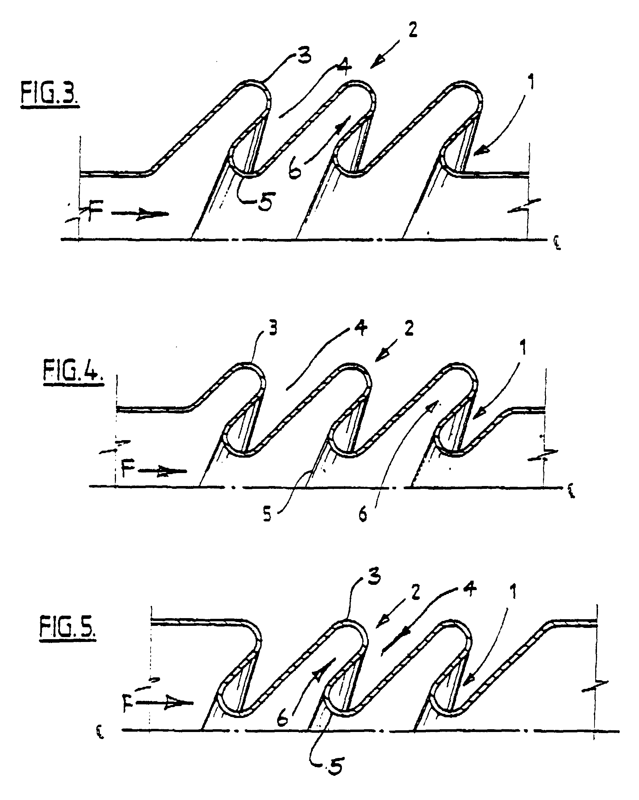

Referring now to Figures 3, 4 and 5, it is envisaged that the conduit 1 and its undulations can be alternatively formed. By way of example only, Figure 3 shows substantially cross-sectionally a portion of a wall of a conduit 1 which is particularly suited to gas-to-fluid heat exchange. The gas is positioned externally of the conduit 1, and with the undulations, being closely defined leaving only a small groove for liquid with an enhanced surface area to length ratio over the form of Figure 1. Such an arrangement would be particularly suited to motor vehicles radiators, space heating apparatus and refrigerator condenser cores.

With reference to Figure 4, it is envisaged that in certain instances, such as where greater need for prevention of "streaming" is required, that the undulating portions of the conduit 1 can be provided and positioned so that internal ribs 5 thereof are mounted substantially inwardly, out of register with remaining portions of the tube, from which the conduit 1 is formed. It will be appreciated that this causes an increased interference to the flow of the fluid through the conduit 1, and a greater turbulating action to the fluid passing therethrough as a result.

In the preferred form of the invention, a flow of fluid through the passageway of the conduit is preferably in the direction of arrow F as is shown by Figures 1 to 5. It will be appreciated that with a flow in this direction, and with the particular shape of the associated ribs 5 and recesses 6 internally thereof, there is an enhanced tendency for fluid to flow into the recesses 6 and turbulate, scroll or rotate therein as it flows through the passageway.

It is to be appreciated that a varying of the shape of the undulations may enable more efficient flow from a substantially opposite direction from that described and therefore the invention is not limited to the flow direction as shown and described with reference to Figures 1 to 5.

It is envisaged that each piece of conduit will be provided with a short spigot portion preferably adjacent each end thereof formed in substantially smooth walled tube, to thus facilitate the convenient connection of such conduits with other portions of apparatus utilising substantially known fittings and techniques.

The conduit 1 may be used as an electrical element housing tube within water heaters such as kettles or cylinders.

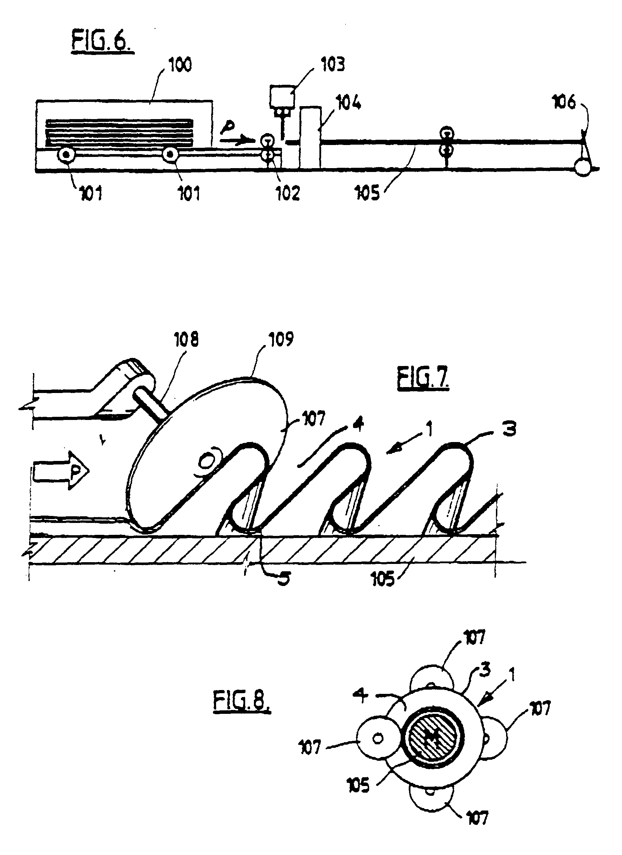

Now turning to Figures 6, 7 and 8, a method of forming the conduit 1 will be described.

With reference to Figures 6, 7 and 8, and in particular Figure 6, it is to be appreciated that the conduit 1 is preferably formed from tubular metal material, such as copper, which is provided in substantially selected lengths and is positioned in a magazine 100. The magazine 100 is arranged by rollers 101 and associated selection means (not shown) to progressively feed a single length of smooth walled tubular material into drive rollers 102 mounted between the magazine 100 and a cutoff means 103 adjacent a forming head 104. The drive rollers 102 in the preferred form of the invention preferably drive the selected length of tubular material through the forming head 104 whereupon the undulating form of the conduit 1 is cold roll-formed thereon as said tube positions and is pushed over an elongate mandrel means 105 which extends from a remote stop portion 106.

If only a shallow corrugation is required, it is possible to dispense with the mandrel and support the tubing on other support means such as rollers.

Preferably suitable actuating means and stop means are provided adjacent the mandrel stop, drive rollers, cut off means and the like so as to enable a sequence operation to occur and enable substantially automated production of the conduit 1 according to a predetermined design.

Turning now particularly to Figures 7 and 8, the forming head 104 of Figure 6 in the preferred form of the invention preferably includes a plurality of diametrically arranged forming wheels 107 each radially arranged relative to the mandrel 105 of the forming head 104.

Each forming wheel is mounted at an angle and with its rotational axis inclined relative to the longitudinal axis of the mandrel and therefore the conduit 1 positioned thereon.

Adjustment of the angle of the forming wheel 107 can change the pitch and depth of the corrugations in the finished conduit.

Peripheral portions 109 of each wheel 107 are each so shaped to engage with outer surfaces of the tube from which the conduit 1 is formed and to run thereon said wheels 107 are each mounted substantially out of line with a normal rolling run of said periphery 109 so that when the tube is positioned over said mandrel 105 and said roller 107 periphery 109 is brought into contact with the exterior surface of the tube, a "wave" of material is developed downstream of said roller 107 and a surface of the tube is formed into the undulations described hereinbefore in relation to Figures 1 to 5 upon the relative rotation of said tube and said wheels 107.

It will be appreciated that the rollers 107 are each mounted to move to and from the operative position to enable feeding of the tube onto the mandrel 105 end prior to formation. It is also to be appreciated that the drive rollers 102 in the preferred form of the invention provide a sufficient degree of pressure P in the direction of arrow P of Figures 6 and 7 so that the "wave" of tube material is formed by each of the rollers or wheels 107 as the drive rollers 102 force the tubular material over the mandrel 105 and maintain pressure against the rollers 107. The pressure required will vary according to the type of material used, the thickness of the wall of the tubing and the corrugation desired.

It will be appreciated that by this method a substantially quadruple start helix is provided on the conduit. It should be appreciated that as many "starts" as may be required may be provided, subject to sufficient rollers 107 being able to be arranged substantially radially of the mandrel 105 and in the forming head 104. In some instances, particularly with larger tubing, it may be desirable to use more than one forming wheel to form each helical spiral. For example, eight forming wheels for a four start helix.

The conduit resulting from this method of manufacture comprises a conduit of relatively uniform wall thickness through the cold rolled forming of the helical spirals. The spirals are created to form a finished conduit of shorter length than the length of initial smooth walled tube used in its creation. Other methods of manufacture may create uneven wall thicknesses and perhaps an uneven distribution of stresses throughout the finished conduit.

Thus, by this invention, there is provided an improved method of manufacture of a helically corrugated conduit providing for economic manufacture of a conduit incorporating a relatively simple design and a high ratio of surface area to length.

## Claims

1. A method of manufacturing a helically corrugated conduit (1) incorporating at least one helical undulation thereo, including the steps of:
i) positioning a portion of substantially smooth-walled tube formed in a malleable material on a support means (105);
ii) positioning at least one forming wheel (107) with at least its outer periphery (109) in contact with the surface of said tube with the axis (108) of said wheel (107) mounted at an angle relative to the longitudinal axis of said tube;
iii) rotating said tube and/or forming wheel (107) one relative to the other to form a wave of material from a wall portion of said tube adjacent said forming wheel (107) to longitudinally undulate a portion of said tube wall substantially helically;
characterised in that the outer periphery (109) of the wheel (107) forms the wave of material substantially without diminishing the wall thickness, so that the finished conduit is shorter than the initial tube.

2. A method of manufacturing a helically corrugated conduit (1) as claimed in Claim 1 characterised in that said tube or forming wheel (107) is moved to traverse a substantial portion of the length of said tube.

3. A method of manufacturing a helically corrugated conduit (1) as claimed in Claim 1 or Claim 2 characterised in that a multiplicity of forming wheels (107) are positioned about the circumference of said tube to form a multiplicity of helical spirals.

4. A method of manufacturing a helically corrugated conduit (1) as claimed in Claim 3 characterised in that said multiplicity of forming wheels (107) comprises four forming wheels (107).

5. A method of manufacturing a helically corrugated conduit (1) as claimed in any preceding claim, characterised in that a portion of said smooth walled tube is unformed adjacent an end of said tube.

6. A method of manufacturing a helically corrugated conduit (1) as claimed in any preceding claim, wherein said tube is progressed against said forming wheel (107) under a pressure so as to form the said helical spiral in the wall of said tube.

7. A method of manufacturing a helically corrugated conduit (1) as claimed in claim 6
characterised in that said tube is progressed towards said forming wheel (107) by driving means.

8. A method of manufacturing a helically corrugated conduit (1) as claimed in claim 7
characterised in that said driving means comprise drive rollers (102).

9. A method of manufacturing a helically corrugated conduit (1) as claimed in any preceding claim,
characterised in that said support means comprise a cylindrical mandrel (105) positioned within said tube.

## Patentansprüche

1. Verfahren zur Herstellung eines wendelgewellten Rohrs (1) mit zumindest einer schraubenförmigen Wendel darauf, wobei die Schritte umfaßt sind:
(i) Anordnen eines Bereichs einer im wesentlichen glattwandigen, aus einem schmiedbaren Werkstoff gebildeten Röhre auf Halteelementen (105);
(ii) Anordnen zumindest eines Formrades (107) mit zumindest seinem äußeren Umfang (109) in Kontakt mit der Oberfläche der Röhre, wobei die Achse (108) des Rades (107) relativ zur Längsachse der Röhre in einem Winkel befestigt ist;
(iii) Drehen der Röhre und / oder des Formrades (107) eines relativ gegen das andere, um eine Materialwelle von einem Wandbereich der Röhre neben dem Formrad (107) zu formen, um in Längsrichtung einen Bereich der Röhrenwand im wesentlichen schraubenförmig zu wendeln;
dadurch gekennzeichnet, daß der äußere Umfang (109) des Rades (107) die Materialwelle im wesentlichen ohne Verringerung der Wandstärke formt, so daß das fertige Rohr kürzer ist als die ursprüngliche Röhre.

2. Verfahren zur Herstellung eines wendelgewellten Rohrs (1) nach Anspruch 1, dadurch gekennzeichnet, daß die Röhre oder das Formrad (107) zum Überqueren eines wesentlichen Bereichs der Länge der Röhre bewegt wird.

3. Verfahren zur Herstellung eines wendelgewellten Rohrs (1) nach Anspruch 1 oder 2, dadurch gekennzeichnet, daß eine Vielzahl von Formrädern (107) um den Umfang der Röhre angeordnet werden, um eine Vielzahl von Wendelspiralen zu formen.

4. Verfahren zur Herstellung eines wendelgewellten Rohrs (1) nach Anspruch 3, dadurch gekennzeichnet, daß die Vielzahl der Formräder (107) vier Formräder (107) umfassen.

5. Verfahren zur Herstellung eines wendelgewellten Rohrs (1) nach einem der vorhergehenden Ansprüche, dadurch gekennzeichnet, daß ein Bereich der glatt bewandeten Röhre neben einem Ende der Röhre ungeformt bleibt.

6. Verfahren zur Herstellung eines wendelgewellten Rohrs (1) nach einem der vorhergehenden Ansprüche, dadurch gekennzeichnet, daß die Röhre gegen das Formrad (107) unter Druck vorwärts bewegt wird, so daß die Schraubenwendel in die Wand der Röhre geformt wird.

7. Verfahren zur Herstellung eines wendelgewellten Rohrs (1) nach Anspruch 6, dadurch gekennzeichnet, daß die Röhre zum Formrad (107) durch Antriebselemente vorwärts bewegt wird.

8. Verfahren zur Herstellung eines wendelgewellten Rohrs (1) nach Anspruch 7, dadurch gekennzeichnet, daß die Antriebselemente Antriebsrollen (102) umfassen.

9. Verfahren zur Herstellung eines wendelgewellten Rohrs (1) nach einem der vorhergehenden Ansprüche, dadurch gekennzeichnet, daß die Halteelemente einen zylindrischen Dorn (105) innerhalb der Röhre umfassen.

## Revendications

1. Procédé de production d'un conduit à paroi ondulée en hélice (1), présentant au moins sur sa paroi une ondulation en hélice, comportant les étapes consistant à :
i) positionner sur des moyens formant support (105) une portion d'un tube à paroi substantiellement lisse formé dans un matériau malléable ;
ii) positionner au moins une roue de formage (107) avec au moins sa périphérie extérieure (109) en contact avec la surface dudit tube, l'axe (108) de ladite roue (107) faisant un angle avec l'axe longitudinal dudit tube ;
iii) entraîner en rotation ledit tube et/ou ladite roue de formage (107) l'un par rapport à l'autre pour, à partir d'une portion de paroi dudit tube adjacente à ladite roue de formage (107), former une onde de matériau pour onduler longitudinalement une portion de ladite paroi de tube substantiellement en hélice ;
caractérisé par le fait que la périphérie extérieure (109) de la roue (107) forme l'onde de matériau substantiellement sans diminuer l'épaisseur de paroi, de sorte que le conduit, fini, est plus court que le tube initial.

2. Procédé de production d'un conduit à paroi ondulée en hélice (1) comme revendiqué dans la revendication 1, caractérisé par le fait que ledit tube ou ladite roue de formage (107) se déplace pour franchir une portion substantielle de la longueur dudit tube.

3. Procédé de production d'un conduit à paroi ondulée en hélice (1) comme revendiqué dans la revendication 1 ou la revendication 2, caractérisé par le fait qu'une multiplicité de roues de formage (107) sont positionnées autour de la circonférence dudit tube pour former une multiplicité de spirales en hélice.

4. Procédé de production d'un conduit à paroi ondulée en hélice (1) comme revendiqué dans la revendication 3, caractérisé par le fait que ladite multiplicité de roues de formage (107) comporte quatre roues de formage (107).

5. Procédé de production d'un conduit à paroi ondulée en hélice (1) comme revendiqué dans l'une quelconque des revendications précédentes, caractérisé par le fait qu'une portion dudit tube à paroi lisse reste non formée près d'une extrémité dudit tube.

6. Procédé de production d'un conduit à paroi ondulée en hélice (1) comme revendiqué dans l'une quelconque des revendications précédentes, dans lequel on fait progresser ledit tube contre ladite roue de formage (107) sous une certaine pression de façon à former ladite spirale en hélice dans la paroi dudit tube.

7. Procédé de production d'un conduit à paroi ondulée en hélice (1) comme revendiqué dans la revendication 6, caractérisé par le fait que l'on fait progresser ledit tube en direction de ladite roue de formage (107) grâce à des moyens d'entraînement.

8. Procédé de production d'un conduit à paroi ondulée en hélice (1) comme revendiqué dans la revendication 7, caractérisé par le fait que lesdits moyens d'entraînement comportent des rouleaux d'entraînement (102).

9. Procédé de production d'un conduit à paroi ondulée en hélice (1) comme revendiqué dans l'une quelconque des revendications précédentes, caractérisé par le fait que lesdits moyens formant support comportent un mandrin cylindrique (105) positionné à l'intérieur dudit tube.
